# FASCICULE DE BREVET EUROPEEN

(11) **EP 1 952 599 B1**
(45) Date de publication et mention de la délivrance du brevet: **30.06.2010**
(21) Numéro de dépôt: 06842013.2
(22) Date de dépôt: 21.11.2006
(51) Int. Cl.: H04L 12/58

(54) **PROCEDE DE DIFFUSION MAITRISEE D'INFORMATIONS**
VERFAHREN ZUR DIFFUSION STEUERBARER INFORMATIONEN
CONTROLLABLE INFORMATION DIFFUSION METHOD

(30) Priorité: 21.11.2005 FR 0553529
(43) Date de publication de la demande: 06.08.2008
(73) Titulaire: FRANCE TELECOM, 75015 Paris (FR)
(72) Inventeur: BELIN, Pascal, F-92130 Issy Les Moulineaux (FR); BERTRAND, Sébastien, F-75020 Paris (FR)
(86) Numéro de dépôt international: PCT/FR2006/051202
(87) Numéro de publication internationale: WO 2007/057621

(56) Documents cités:
- EP-A- 1 513 303
- US-A1- 2002 111 947

## Description

La présente invention concerne un procédé de transmission de données au travers d'au moins un réseau de communication apte à relier entre eux différents terminaux mis à disposition de différents utilisateurs.

De tels procédés sont couramment mis en oeuvre pour permettre par exemple à des utilisateurs d'ordinateurs personnels de communiquer entre eux *via* un réseau maillé de type Internet et éventuellement une ou plusieurs connexions sans fil de type Wi-Fi (abréviation bien connue de l'homme du métier de l'expression anglaise "Wireless Fidelity") définies dans une norme IEEE 802.11. De tels procédés sont également mis en oeuvre pour permettre à des utilisateurs de téléphones mobiles de communiquer entre eux, par exemple *via* un réseau de téléphonie mobile de troisième génération de type UMTS (abréviation bien connue de l'homme du métier de l'expression anglaise "Universal Mobile Telecommunication System").

En particulier, un tel procédé est mis en oeuvre dans des applications de courrier électronique.

L'invention est liée aux considérations suivantes : les inventeurs ont constaté que, lorsqu'un terminal dit instigateur émet vers un ou plusieurs destinataires un message porteur d'une requête, ce ou ces destinataires ont toute latitude pour retransmettre à leur tour vers d'autres destinataires le message en question, donnant ainsi potentiellement naissance à une diffusion massive du message de requête original, diffusion sur laquelle le terminal instigateur perdra très vite tout contrôle. C'est ainsi que se créent des boucles de circulation perpétuelle de requêtes devenant souvent caduques au fil du temps, une telle boucle pouvant être réactivée à chaque découverte du message de requête par un nouveau destinataire, qui risque de faire suivre ce message à différents autres destinataires sans indication d'historique ou de contexte. De telles boucles causent un désagrément aux utilisateurs du système en provoquant, d'une part, une surabondance de messages portés à leur attention, et, d'autre part, un encombrement inutile des réseaux de communication qui constitue non seulement un gaspillage en termes de bande passante, mais aussi un surcoût en termes de frais de fonctionnement et de maintenance des réseaux, lequel surcoût étant d'une manière ou d'une autre supporté collectivement par les utilisateurs de ces réseaux, par exemple par répercussion sur des frais d'abonnement facturés auxdits utilisateurs.

La demande de brevet US2002/0111947 divulgue un procédé de communication d'un message à un destinataire travers un réseau de communication, dans lequel le message est stocké dans un espace mémoire, seule une notification comportant une adresse de l'espace mémoire étant transmise au destinataire.

La demande de brevet EP1513303 divulgue un procédé de communication similaire, dans lequel un message est stocké dans un espace mémoire et seul un message court comportant une référence à cet espace mémoire, dont l'emplacement peut varier dans le temps, est transmis à un destinataire.

La présente invention a pour but de remédier à ces inconvénients en proposant un procédé de transmission de données dans lequel une requête peut être émise à l'initiative d'un terminal instigateur sans pour autant que ce terminal instigateur ne perde tout contrôle sur la diffusion ultérieure de cette requête.

En effet, selon l'invention, un procédé conforme au paragraphe introductif est **caractérisé en ce qu**'il inclut :
- une étape de mémorisation, exécutée sur commande de l'un des terminaux dit instigateur, d'au moins une information dans un premier espace mémoire auquel seul un accès en lecture est possible pour des terminaux non-instigateurs, ledit procédé étant **caractérisé en ce qu**'il comporte en outre:
- une étape de transmission d'un message de sollicitation à destination d'au moins un terminal non-instigateur, lequel message de sollicitation incluant une indication de localisation dudit premier espace mémoire, et lequel message de sollicitation étant porteur d'une adresse de réponse à laquelle toute réponse au message de sollicitation doit être envoyée pour être mémorisée dans un deuxième espace mémoire, et
- une étape de modification de droits d'accès destinée à être exécutée sur commande du terminal instigateur, et à l'issue de laquelle un accès en lecture audit deuxième espace mémoire est autorisé pour au moins un terminal non-instigateur.

Ainsi, lorsque le procédé conforme à l'invention est mis en oeuvre, c'est une invitation à consulter une information qui est diffusée sous la forme du message de sollicitation, éventuellement sans contrôle du terminal instigateur, tandis que l'information elle-même, et particulièrement sa pérennité, pourra faire l'objet d'un contrôle étroit de la part de l'utilisateur du terminal instigateur. L'indication de localisation incluse dans le message de sollicitation pourra prendre la forme d'un lien hypertexte ou être constituée par une adresse propre à l'espace mémoire dans lequel l'information considérée aura été mémorisée. Un terminal ayant reçu le message de sollicitation pourra former une requête d'accès à l'information identifiée par cette indication de localisation, permettant ainsi à son utilisateur de prendre connaissance de l'information mémorisée.

L'invention donne à l'utilisateur du terminal instigateur la possibilité de supprimer l'information identifiée par l'indication de localisation incluse dans le message de sollicitation, par exemple dans un cas où cette information est devenue caduque, de sorte que tout destinataire ultérieur d'un tel message de sollicitation verra échouer ses éventuelles requêtes d'accès à cette information, ce qui le dissuadera de faire suivre ce message de sollicitation devenu sans objet. L'invention permet donc de prévenir la formation de boucles de circulation perpétuelle de requêtes caduques.

L'invention autorise de plus une gestion centralisée des réponses qui parviendront toutes en un même endroit d'un système dans lequel le procédé conforme à l'invention sera mise en oeuvre. Ceci permettra en particulier de conférer à l'utilisateur du terminal instigateur un contrôle exclusif de conditions dans lesquelles chacune de ces réponses pourra être transmises à des terminaux autres que celui qui aura initialement émis la réponse considérée. L'invention permettra donc par exemple à l'utilisateur du terminal instigateur de jouer un rôle de modérateur en filtrant les réponses qui lui paraîtront dérangeantes pour lui-même ou pour des tiers. En particulier l'invention permet à l'utilisateur d'exercer de manière simple un pouvoir discrétionnaire de sélection d'un ou de plusieurs utilisateurs de terminaux non-instigateurs à la disposition desquels une réponse qu'ils n'auront pas initialement émise pourra être tenue. La possibilité de communiquer une réponse à des terminaux tiers permettra par exemple dans certains cas de faire prendre conscience aux utilisateurs de ces terminaux tiers que la requête faisant l'objet du message de sollicitation d'origine a été satisfaite, ce qui dissuadera de manière naturelle lesdits utilisateurs de propager plus avant ce message de sollicitation devenu caduc.

Selon un mode de mise en oeuvre particulier de l'invention, l'adresse de réponse identifie un espace mémoire auquel seul un accès en écriture est possible pour un terminal non-instigateur.

Ce mode de mise en oeuvre particulier garantit en principe qu'aucun terminal non-instigateur ne pourra accéder à une réponse si aucune mesure spécifique n'est prise pour autoriser un tel accès.

On pourra optionnellement prévoir de subordonner toute exécution d'étape de modification de droits d'accès à une obtention préalable d'une autorisation expresse en ce sens de la part de l'émetteur de la réponse considérée.

Les réponses pourront être mémorisées en des endroits distincts de l'espace mémoire où est mémorisée l'information visée dans le message de sollicitation d'origine. Cependant, il sera le plus souvent préférable de regrouper toutes les données relatives à une même information, de sorte que l'adresse de réponse véhiculée par le message de sollicitation pourra être identique à l'indication de localisation qui est également contenue dans ce message. Dans un tel cas, pour éviter tout conflit d'adressage pouvant résulter en une perte de données, un procédé tel que décrit plus haut inclura en outre une étape de recherche d'un espace libre adjacent à l'espace mémoire identifié par l'indication de localisation, et une étape de stockage de la réponse dans ledit espace libre adjacent.

Ainsi qu'exposé précédemment, l'invention trouve une application particulièrement avantageuse dans des situations ou plusieurs transmissions successives d'une même requête sont susceptibles d'intervenir, en tant que permettant à l'utilisateur du terminal instigateur de conserver une certaine forme de contrôle sur une telle diffusion de sa requête, ce qui est particulièrement utile lorsque son sujet est de nature personnelle, en tant que révélateur de détails propres au mode de vie de l'utilisateur du terminal instigateur.

Selon une première variante de l'invention, un procédé tel que décrit plus haut inclura donc au moins une étape de retransmission depuis un terminal non-instigateur donné vers un autre terminal non-instigateur, d'un message de sollicitation reçu par ledit terminal non-instigateur donné.

De telles étapes de retransmission sont avantageuses en ce qu'elles permettent à un message de sollicitation, initialement émis par un utilisateur d'un terminal instigateur qui ne connaîtrait pas un destinataire véritablement pertinent, d'être progressivement redirigé de manière naturelle vers le destinataire le plus pertinent par des récipiendaires successifs de ce message de sollicitation. En effet, après avoir reçu un message de sollicitation, un utilisateur donné choisira naturellement pour destinataire suivant une personne qui paraîtra à cet utilisateur donné plus capable que lui-même de traiter efficacement l'information concernée par le message de sollicitation.

Selon un mode de mise en oeuvre avantageux de cette première variante, un procédé tel que décrit ci-dessus est **caractérisé en ce qu**'il inclut en outre au moins une étape de comptage d'un nombre de transmissions auxquelles un même message de sollicitation a été soumis, et au moins une étape de comparaison dudit nombre de transmissions avec un nombre prédéterminé.

Ce mode de mise en oeuvre permet à l'utilisateur du terminal instigateur d'exercer un contrôle sur la diffusion de son message de sollicitation, en vue d'empêcher une dissémination trop importante de l'information concernée par ce message de sollicitation. Ce mode de mise en oeuvre permet de limiter les transmissions redondantes d'un même de sollicitation à un même destinataire par des chemins différents, et permet en outre de prévenir la formation de boucles de circulation perpétuelle de requêtes, et particulièrement de requêtes non-encore caduques.

Chaque terminal pourra ainsi par exemple inclure des moyens d'incrémentation d'un nombre véhiculé par le message de sollicitation, lesquels moyens étant alors destinés à être activés au moment de la transmission effective du message de sollicitation par le terminal.

Selon une deuxième variante de l'invention, qui peut être mise en oeuvre alternativement ou cumulativement avec la première variante, un procédé tel que décrit plus haut inclura en outre une étape d'attribution d'une date limite de pertinence au message de sollicitation, et une étape de restriction d'accès à l'information visée par l'indication de localisation incluse dans ledit message de sollicitation, laquelle étape de restriction étant destinée à être exécutée sitôt dépassée la date limite de pertinence.

Cette deuxième variante permet d'éviter que des informations obsolètes ne continuent à faire l'objet d'un volume significatif de communication en empêchant une transmission de ces informations dans des conditions définies par l'utilisateur du terminal instigateur. Cette deuxième variante contribue donc à réduire les risques de formation de boucles de circulation perpétuelle de requêtes caduques.

L'étape de restriction d'accès pourra avoir des contenus différents en fonction des circonstances de mise en oeuvre de l'invention, et faire peser des contraintes de plus en plus importantes sur l'information visée par l'indication de localisation. Selon un premier niveau de contrainte, l'étape de restriction d'accès pourra ne consister qu'en une inhibition de diffusion des messages de sollicitation, de sorte que tous les utilisateurs de terminaux ayant déjà reçu un message de sollicitation pourront continuer à consulter le contenu de l'espace mémoire concerné et à en faire évoluer le contenu. Selon un deuxième niveau de contrainte, l'étape de restriction d'accès pourra consister en une interdiction de tout accès en lecture comme en écriture à l'information visée par l'indication de localisation, de sorte que cette information sera alors purement et simplement archivée au seul bénéfice de l'utilisateur du terminal instigateur. Enfin, selon un ultime niveau de contrainte, l'étape de restriction d'accès pourra consister en une suppression pure et simple de l'information visée par l'indication de localisation.

Selon un mode de réalisation particulier de cette deuxième variante, un procédé tel que décrit plus haut inclura en outre une étape d'attribution d'une date limite de réponse au message de sollicitation, et une étape d'inhibition d'écriture dans un espace mémoire de réponse, laquelle étape d'inhibition d'écriture étant destinée à être exécutée sitôt dépassée ladite date limite de réponse.

Ce mode de réalisation particulier permet de définir un autre niveau de contrainte qui s'insère entre les premier et deuxième niveaux décrits ci-dessus, en tant que permettant à tous les utilisateurs de terminaux ayant déjà reçu un message de sollicitation de continuer à consulter le contenu de l'espace mémoire concerné, qui sera alors figé.

Dans certains modes de mise en oeuvre de cette deuxième variante de l'invention, l'utilisateur du terminal instigateur sera de préférence muni de moyens pour définir de manière dynamique le contenu de l'étape de restriction d'accès lui permettant de choisir le niveau de contrainte qui lui paraît le plus pertinent parmi les différents niveaux de contrainte décrits ci-dessus.

Selon l'un de ses aspects matériels, l'invention concerne également un signal destiné à être transmis entre deux terminaux appartenant à une pluralité de terminaux reliés entre eux par au moins un réseau de communication, ledit signal étant **caractérisé en ce qu**'il est porteur d'un message de sollicitation incluant:
- une indication de localisation d'au moins un premier espace mémoire où a été mémorisée une information sur commande d'un terminal dit instigateur, premier espace mémoire auquel seul un accès en lecture est possible pour des terminaux non-instigateurs,
- et une adresse de réponse à laquelle toute réponse au message de sollicitation doit être envoyée pour être mémorisée dans un deuxième espace mémoire, un accès en lecture audit deuxième espace mémoire étant autorisé pour au moins un terminal non-instigateur après modification de droits d'accès par le terminal instigateur.

Selon un autre de ses aspects matériels, l'invention concerne également, en tant que moyen utile à la mise en oeuvre du procédé décrit plus haut, un programme d'ordinateur destiné à être mis en oeuvre dans un système de transmission de données incluant au moins un réseau de communication apte à relier entre eux différents terminaux, programme d'ordinateur incluant au moins une série d'instructions aptes à provoquer, sur commande d'un terminal dit instigateur, une exécution d'au moins une étape de mémorisation d'une information dans un premier espace mémoire auquel seul un accès en lecture est possible pour des terminaux non-instigateurs, ledit programme d'ordinateur étant **caractérisé en ce qu**'il comporte en outre:
- une série d'instructions aptes à provoquer une exécution d'une étape de transmission d'un message de sollicitation à destination d'au moins un terminal non-instigateur, lequel message de sollicitation incluant une indication de localisation dudit premier espace mémoire, et lequel message de sollicitation étant porteur d'une adresse de réponse à laquelle toute réponse au message de sollicitation doit être envoyée pour être mémorisée dans un deuxième espace mémoire, et
- une série d'instructions aptes à provoquer une exécution d'une étape de modification de droits d'accès, à l'issue de laquelle un accès en lecture audit deuxième espace mémoire est autorisé pour au moins un terminal non-instigateur.

Selon encore un autre de ses aspects matériels, l'invention concerne encore un support mémoire sur lequel est mémorisé un programme d'ordinateur tel que décrit ci-dessus.

Selon un autre de ses aspects matériels, l'invention concerne en outre un système de transmission de données incluant au moins un réseau de communication apte à relier entre eux différents terminaux, système incluant en outre des moyens de mémorisation, destinés à être activés sur commande de l'un des terminaux dit instigateur, et à mémoriser au moins une information dans un premier espace mémoire auquel seul un accès en lecture est possible pour des terminaux non-instigateurs, ledit système étant **caractérisé en ce qu**'il comporte en outre:
d es moyens de transmission d'un message de sollicitation à destination d'au moins un terminal non-instigateur, lequel message de sollicitation incluant une indication de localisation dudit premier espace mémoire, et lequel message de sollicitation étant porteur d'une adresse de réponse à laquelle toute réponse au message de sollicitation doit être envoyée pour être mémorisée dans un deuxième espace mémoire, et
d es moyens de modification de droits d'accès, aptes à autoriser un accès en lecture audit deuxième espace mémoire pour au moins un terminal non-instigateur.

Selon un autre de ses aspects matériels, l'invention concerne aussi un dispositif de télécommunication apte à être relié à d'autres dispositifs de télécommunication *via* au moins un réseau de communication, **caractérisé en ce qu**'il inclut en outre:
- des moyens de transmission d'un message de sollicitation à destination d'au moins un autre dispositif de télécommunication, lequel message de sollicitation incluant une indication de localisation d'un premier espace mémoire dans lequel est mémorisée au moins une information, et lequel message de sollicitation étant porteur d'une adresse de réponse à laquelle toute réponse au message de sollicitation doit être envoyée pour être mémorisée dans un deuxième espace mémoire,
- et des moyens de modification de droits d'accès, aptes à autoriser un accès en lecture audit deuxième espace mémoire pour au moins un terminal non-instigateur.

Dans certains modes de mise en oeuvre de l'invention, les moyens de transmission et les moyens de mémorisation pourront être localisés dans des dispositifs distincts.

L'invention pourra toutefois également être mise en oeuvre au moyen de dispositifs intégrant à la fois des moyens de transmission de messages de sollicitation et des moyens de mémorisation d'informations concernées par ces requêtes, auquel cas les utilisateurs de ces terminaux formeront une communauté de personnes caractérisée par le fait que chacun de ses membres dispose d'un moyen autonome de mise en oeuvre de l'invention.

L'invention sera mieux comprise à l'aide de la description suivante, faite à titre d'exemple non-limitatif et en regard des dessins annexés, dans lesquels:
- la figure 1 est un schéma fonctionnel décrivant un premier mode de réalisation d'un système de transmission de données dans lequel un procédé conforme à l'invention est mis en oeuvre,
- la figure 2 est un schéma fonctionnel décrivant un deuxième mode de réalisation d'un tel système de transmission de données.

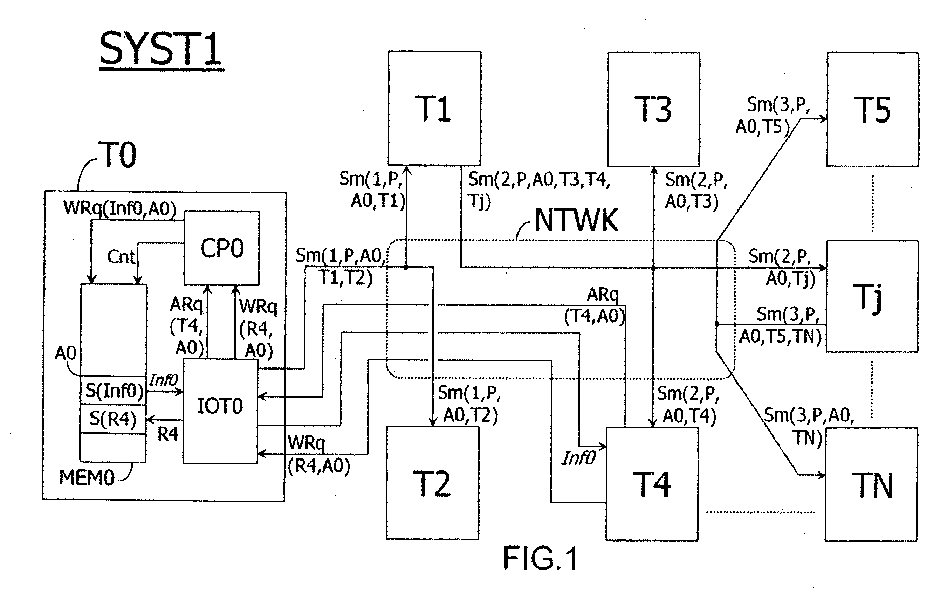

La **Fig.1** représente schématiquement un système SYST1 de transmission de données conforme à un premier mode de réalisation de l'invention, lequel système SYST1 comporte une pluralité de terminaux T0, T1, T2, T3, T4, T5 ... Tj ... TN reliés ensemble par au moins un réseau de communication NTWK, par exemple un réseau maillé de type Internet auquel lesdits terminaux sont aptes à accéder *via* des liaisons sans fil de type Wi-Fi ou des liaisons filaires de type Ethernet, RTC (abréviation bien connue de l'homme du métier de l'expression "Réseau téléphonique Commuté") ou ADSL (abréviation bien connue de l'homme du métier de l'expression anglaise "Asymmetric Digital Subscriber Line").

Dans l'exemple de mise en oeuvre de l'invention décrit ici, le terminal T0 est destiné à transmettre à d'autres terminaux une requête définie par son utilisateur, de sorte que le terminal T0 sera considéré comme étant un terminal instigateur. La requête concernée pourra consister en une simple communication d'information, ou en une interrogation, et pourra éventuellement inclure une pièce jointe comme un programme audiovisuel. Ainsi, si l'utilisateur du terminal T0 dispose d'une pièce vacante dans un appartement où il réside, il pourra formuler une requête sous la forme d'un ensemble d'informations Inf0 incluant, d'une part, une offre de location de ladite pièce vacante, et, d'autre part, un enregistrement audio/vidéo d'une visite commentée de l'appartement considéré.

A cet effet, le terminal instigateur T0 inclut des moyens de mémorisation MEM0, destinés dans cet exemple à être activés au moyen d'un signal de commande en écriture WRq(Inf0,A0) émanant d'une unité centrale de traitement CP0 incluse dans le terminal T0. Ces moyens de mémorisation mémoriseront ainsi l'ensemble d'informations Inf0 dans un espace mémoire S(Inf0) délimité par une adresse initiale A0, espace mémoire S(Inf0) auquel seul un accès en lecture est possible pour les terminaux non-instigateurs T1, T2, T3, T4, T5 ... Tj...TN, c'est-à-dire pour tous les terminaux distincts du terminal instigateur T0.

Le terminal instigateur T0 inclut en outre des moyens de transmission inclus dans une interface d'entrée/sortie IOT0 d'un message de sollicitation Sm(1,P,A0,T1,T2) à destination dans cet exemple des terminaux T1 et T2. Ce message de sollicitation Sm(1,P,A0,T1,T2) inclut une indication de localisation de l'espace mémoire S(Inf0) dans lequel est mémorisé l'ensemble d'informations Inf0. Dans le cas présent, cette indication de localisation est formée par l'adresse initiale A0.

Le message de sollicitation Sm(1,P,A0,T1,T2) présente en outre un premier champ incluant un nombre correspondant au nombre de fois où ledit message a été transmis, lequel nombre a une valeur égale à 1 à ce stade de l'exécution du procédé conforme à l'invention. Le message de sollicitation Sm(1,P,A0,T1,T2) présente un deuxième champ incluant un nombre P correspondant à un nombre maximum de transmissions successives du message de sollicitation, lequel nombre aura été préalablement défini par l'utilisateur du terminal instigateur T0 et inséré dans le message Sm(1,P,A0,T1,T2) par l'unité centrale de traitement CP0. Ainsi, lorsqu'un terminal non-instigateur recevra un tel message de sollicitation, il comparera entre eux les nombres contenus dans les premier et deuxième champs précédemment décrits et en déduira s'il est autorisé ou non à retransmettre le message de sollicitation concerné vers d'autres terminaux, une telle comparaison pouvant par exemple résulter en une inhibition des moyens de transmission inclus dans le terminal non-instigateur concerné.

Dans l'exemple décrit ici, le message de sollicitation Sm(1,P,A0,T1,T2) est séparé par le réseau de communication NTWK en deux messages individuels Sm(1,P,A0,T1) et Sm(1,P,A0,T2) respectivement destinés aux terminaux non-instigateurs T1 et T2. Chaque utilisateur d'un de ces terminaux peut alors consulter l'ensemble d'informations Inf0 en vue de prendre connaissance de la requête qui lui a été initialement expressément adressée par l'utilisateur du terminal instigateur T0. La présente figure ne décrit pas cet échange de signaux, mais un échange analogue sera décrit dans la suite de l'exposé.

Dans la présente hypothèse de fonctionnement, l'utilisateur du terminal non-instigateur T1, après avoir consulté l'ensemble d'informations Inf0, aura considéré que des utilisateurs d'autres terminaux non-instigateurs T3, T4 et Tj pourraient être des destinataires pertinents de la requête représentée par cet ensemble d'informations Inf0. L'utilisateur du terminal non-instigateur T1 retransmet alors un message de sollicitation Sm(2,P,A0,T3,T4,Tj) dans lequel le premier champ inclut un nombre égal à 2, ce qui n'est possible que si P est supérieur ou égal à 2. Ce message de sollicitation Sm(2,P,A0,T3,T4,Tj) peut inclure un commentaire supplémentaire inséré par l'utilisateur du terminal T1 a l'attention des utilisateurs des terminaux T3,T4 et Tj. Le message de sollicitation Sm(2,P,A0,T3,T4,Tj) se voit ensuite séparé par le réseau de communication NTWK en trois messages individuels Sm(2,P,A0,T3), Sm(2,P,A0,T4) et Sm(2,P,A0,Tj) respectivement destinés aux terminaux non-instigateurs T3, T4 et Tj. Chaque utilisateur d'un de ces terminaux peut alors consulter l'ensemble d'informations Inf0 en vue de prendre connaissance de la requête, bien que celle-ci ne lui ait pas été adressée directement par l'utilisateur du terminal instigateur T0.

Dans l'hypothèse de fonctionnement décrite ici, l'utilisateur du terminal non-instigateur Tj, après avoir consulté l'ensemble d'informations Inf0, aura considéré que des utilisateurs d'autres terminaux non-instigateurs T5 et TN pourraient être des destinataires pertinents de la requête représentée par cet ensemble d'informations Inf0. L'utilisateur du terminal non-instigateur Tj retransmet alors un message de sollicitation Sm(3,P,A0,T5,TN) dans lequel le premier champ inclut un nombre à alors égal à 3, ce qui n'est possible que si P est supérieur ou égal à 3. Ce message de sollicitation Sm(3,P,A0,T5,TN) est séparé en deux messages individuels Sm(3,P,A0,T5) et Sm(3,P,A0,TN) respectivement destinés aux terminaux non-instigateurs T5 et TN, dont les utilisateurs pourront alors consulter l'ensemble d'informations Inf0,

La présente figure décrit comment le terminal T4 accède effectivement à l'ensemble d'informations Inf0 : pour ce faire, ledit terminal T4 émet à destination du terminal instigateur T0 une requête d'accès ARq(T4,A0) aux informations désignées par l'adresse A0, ladite requête étant en outre porteuse d'un identifiant du terminal T4 dont elle émane. Cette requête est reçue par le terminal instigateur T0 via l'interface d'entrée/sortie IOT0, et transmise à l'unité centrale de traitement CP0 à des fins d'autorisation. Après que l'unité centrale de traitement CP0 ait identifié l'émetteur de la requête d'accès ARq(T4,A0) comme autorisé à prendre connaissance des informations Inf0, ladite unité centrale de traitement CP0 envoie aux moyens de mémorisation un signal de contrôle Cnt ordonnant aux moyens de mémorisation MEM0 de permettre au terminal T4 un accès en lecture desdites informations Inf0 *via* l'interface d'entrée/sortie IOT0.

Ainsi, selon l'invention, l'ensemble d'informations Inf0 auquel accède le terminal T4 qui en fait la demande n'est pas mémorisable sur commande de l'utilisateur dudit terminal, l'ensemble d'informations Inf0 étant par exemple intrinsèquement configuré en mode "lecture seule" ce qui est symbolisé graphiquement par le fait que la référence Inf0 attribuée au signal de retour entrant dans le terminal T4 apparaît en italique. L'invention donne donc à l'utilisateur du terminal instigateur T0 la possibilité de supprimer totalement tout accès à l'ensemble d'informations Inf0, par exemple dans un cas où ces informations sont devenues caduques, et donc d'empêcher alors toute transmission de ces informations Inf0 au sein du système SYST1, de sorte que tout destinataire ultérieur d'un message de sollicitation les concernant verra échouer ses éventuelles requêtes d'accès à ces informations Inf0, ce qui le dissuadera de faire suivre ce message de sollicitation devenu sans objet. Une date limite de pertinence pourra d'ailleurs être optionnellement insérée dans un champ du message de sollicitation non-représenté sur la figure, une restriction d'accès à l'information visée par l'indication de localisation incluse dans ledit message de sollicitation étant alors destinée à être exécutée sitôt dépassée la date limite de pertinence en vue d'éviter que des informations obsolètes ne continuent à faire l'objet d'un volume significatif de communication en en empêchant une transmission de ces informations dans des conditions définies par l'utilisateur du terminal instigateur T0.

L'étape de restriction d'accès pourra ne consister qu'en une inhibition de diffusion des messages de sollicitation, mais pourra aussi consister en une interdiction de tout accès en lecture comme en écriture à l'information visée par l'indication de localisation, ou encore, selon un ultime niveau de contrainte, en une suppression pure et simple de l'information visée par l'indication de localisation.

Le message de sollicitation pourra en outre se voir attribuer une date limite de réponse, des moyens d'inhibition d'écriture dans un espace mémoire de réponse étant destinés à être activés sitôt dépassée ladite date limite de réponse. Ces moyens d'inhibition d'écriture pourront être intégrés dans chaque terminal en tant qu'inhibiteurs de moyens de transmission, de ce terminal, lequel sera alors muni d'une horloge interne synchronisée sur une horloge incluse dans le terminal instigateur, lesquelles horloges ne sont pas représentées ici. Ces moyens d'inhibition d'écriture pourront également être tout simplement intégrés au sein même du terminal instigateur T0 et agir directement sur les moyens de mémorisation MEM0. Dans l'hypothèse illustrée ici, l'utilisateur du terminal non-instigateur T4 ayant considéré après consultation des informations Inf0 qu'une réponse de sa part serait utile, émet un message de réponse qui prend dans ce mode de mise en oeuvre particulier de l'invention la forme d'une requête en écriture WRq(R4,A0) de ladite réponse, notée R4. Cette requête en écriture est reçue *via* l'interface d'entrée/sortie IOT0 par l'unité centrale de traitement CP0 incluse dans le terminal instigateur T0 et désigne, en tant qu'adresse d'écriture requise, l'adresse de réponse qui se trouve être identique à l'indication de localisation formée par l'adresse initiale A0, ce qui ' résulte ici d'une convention de fonctionnement de tous les terminaux selon laquelle les champs incluant l'adresse de réponse et l'indication de localisation sont confondus.

Dans d'autres modes de mise en oeuvre de l'invention, deux champs distincts seront utilisés dans le message de sollicitation pour indiquer, d'une part, une localisation des informations concernées par ledit message, et, d'autre part, une adresse de réponse distincte de cette indication de localisation, laquelle adresse de réponse pouvant d'ailleurs renvoyer à des moyens de mémorisation autres que ceux incluant les informations concernées par le message de sollicitation, lesquels autres moyens de mémorisation pouvant même être distants du terminal instigateur et éventuellement reliés à lui par le réseau de communication.

Le terminal instigateur T0 est ici muni de moyens pour rechercher, en vue d'y écrire la réponse R4, un espace libre S(R4) adjacent à l'espace mémoire S(Inf0) identifié par l'indication de localisation A0, lesquels moyens sont ici inclus dans l'unité centrale de traitement CP0 et permettent de regrouper toutes les données relatives à une même information tout en permettant d'utiliser une unique adresse prédéfinie dans le message de sollicitation, sans pour autant provoquer de conflits d'adressage pouvant résulter en une perte de données. Après avoir identifié une adresse initiale de cet espace libre S(R4) adjacent, l'unité centrale de traitement CP0 ordonnera aux moyens de mémorisation MEM0 d'y mémoriser la réponse R4, en vue de rendre sa consultation possible par l'utilisateur du terminal instigateur T0, et par cet utilisateur seulement, cet espace libre S(R4) ayant préalablement été configuré par l'unité centrale de traitement CP0 comme étant seulement accessible en écriture. Après avoir pris connaissance du contenu de la réponse R4, l'utilisateur du terminal instigateur pourra ordonner à l'unité centrale de traitement CP0 d'exécuter au moyen d'un signal de contrôle Cnt adéquat une modification des droits d'accès attachés à l'espace mémoire contenant ladite réponse R4, par exemple pour la rendre accessible en lecture aux autres terminaux non-instigateurs T1, T2, T3...Tj...TN. Dans des modes de mise en oeuvre autres que celui représenté ici, un échange de signaux pourra être préalablement opéré entre le terminal instigateur T0 et le terminal T4 en vue de recueillir auprès de l'utilisateur de ce dernier une autorisation expresse de divulgation de sa réponse R4 à d'autres utilisateurs.

Ce mode de mise en oeuvre est avantageux en ce qu'il permet à l'utilisateur d'exercer de manière simple un pouvoir discrétionnaire de sélection d'un ou de plusieurs utilisateurs de terminaux non-instigateurs à la disposition desquels une réponse qu'ils n'auront pas initialement émise pourra être tenue. La possibilité de communiquer une réponse à des terminaux tiers permettra par exemple dans certains cas de faire prendre conscience aux utilisateurs de ces terminaux tiers que la requête faisant l'objet du message de sollicitation d'origine a été satisfaite, ce qui dissuadera de manière naturelle lesdits utilisateurs de propager plus avant ce message de sollicitation devenu caduc.

Dans une toute autre hypothèse, il est possible que l'utilisateur du terminal instigateur T0 juge le contenu de la réponse R4 inconvenant ou dérangeant, auquel cas il pourra jouer un rôle de modérateur en supprimant purement et simplement cette réponse, voire en ordonnant à l'unité centrale de traitement CP0 de rejeter à l'avenir toute requête en écriture émanant du terminal T4 émetteur de la réponse R4.

Les étapes de mémorisation, de transmission du message de sollicitation, de stockage de réponses à ce message et de modification de droits d'accès à de telles réponses seront avantageusement définies par une ou plusieurs séries d'instructions exécutables par l'unité centrale de traitement CP0 et préalablement mémorisées, soit dans les moyens de mémorisation MEM0, soit encore sur un support mémoire non-représenté ici, distinct de ces moyens de mémorisation MEM0 bien qu'accessible à l'unité centrale de traitement CP0, par exemple un disque dur d'appoint, un disque de stockage optique ou magnéto-optique, ou encore un objet portatif à mémoire de type carte à puce, bâtonnet mémoire ou clé USB (abréviation bien connue de l'homme du métier de l'expression anglaise "Universal Serial Bus").

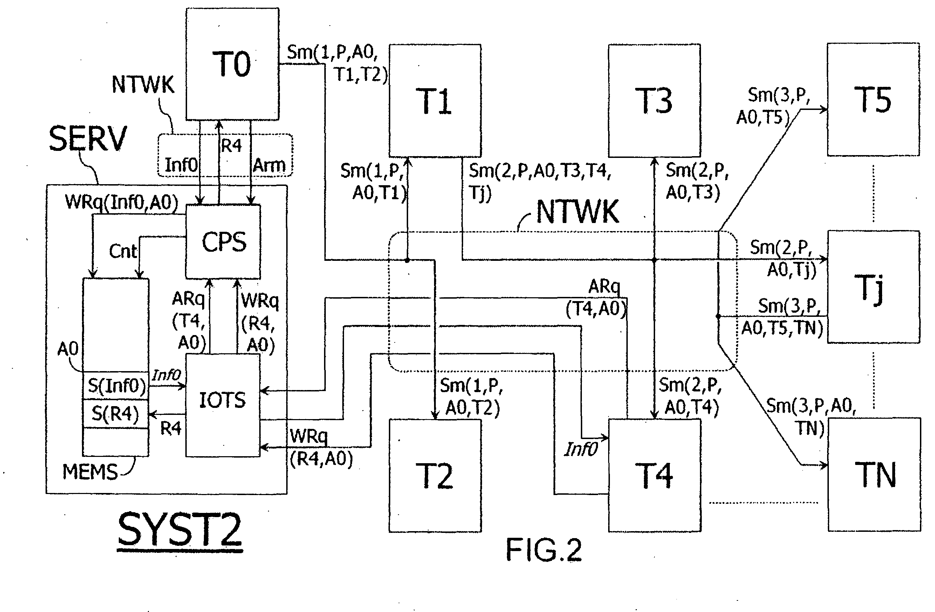

La **Fig.2** représente schématiquement un système de transmission de données SYST2 conforme à un deuxième mode de réalisation de l'invention, lequel système SYST2 comporte, outre une pluralité de terminaux T0, T1, T2, T3, T4, T5...Tj...TN reliés ensemble par au moins un réseau de communication NTWK, un dispositif intermédiaire de communication formé ici par un serveur SERV et destiné à être contrôlé au moins partiellement par un terminal instigateur, qui sera matérialisé dans cet exemple par le terminal T0. Dans la mesure du possible, des éléments communs entre la présente figure et la précédente se sont vus attribuer de mêmes signes de référence.

Le serveur SERV inclut ici des moyens de mémorisation MEMS, une unité centrale de traitement CPS et une interface d'entrée/sortie IOTS respectivement semblables aux moyens de mémorisation MEM0, à l'unité centrale de traitement CP0 et à l'interface d'entrée/sortie IOT0 précédemment décrits, à ceci près que l'unité centrale de traitement CPS est pilotée par le terminal instigateur T0, lequel est dans le présent exemple destiné à émettre lui-même le message Sm(1,P,A0,T1,T2), tandis que l'adresse A0, à laquelle toute réponse à un tel message de sollicitation devra être envoyée, désigne un espace mémoire S(Inf0) à présent localisé dans le serveur SERV et non dans le terminal instigateur T0, la description précédente des opérations de propagation des messages de sollicitation, de consultation des informations concernées par ces messages et d'émission de réponses à ces messages étant transposable à ce deuxième mode de réalisation de l'invention.

Dans d'autres modes de mise en oeuvre de l'invention, on pourra également intégrer dans le serveur SERV les moyens de transmission du message de solicitation, le terminal instigateur T0 n'ayant plus alors de contact direct qu'avec le serveur SERV.

Le terminal instigateur T0 et le serveur SERV sont destinés à échanger entre eux un signal porteur des informations Inf0 à mémoriser dans les moyens de mémorisations MEMS, un signal porteur de la réponse R4 à transmettre à l'utilisateur du terminal instigateur T0 et un signal Arm porteur d'un ordre de modification des droits d'accès à cette réponse MEMS qui est stockée dans les moyens de mémorisations MEMS. Dans une situation où le terminal instigateur T0 et le serveur SERV ne seraient pas localisés en un même lieu géographique, les signaux évoqués ci-dessus seront avantageusement transmis via le réseau de communication NTWK, dont une extension est représentée sur la présente figure entre le terminal instigateur T0 et le serveur SERV. En outre, puisque le terminal instigateur et le serveur sont en principe physiquement séparables, il est tout-à-fait envisageable d'attribuer à chaque terminal inclus dans le système SYST2 une faculté de prise de contrôle d'une portion des moyens de mémorisation MEMS *via* l'unité centrale de traitement CPS, de manière à permettre à chacun de ces terminaux de devenir un terminal instigateur afin de jouer un rôle semblable à celui dévolu au terminal T0 dans l'hypothèse de fonctionnement illustrée ici.

## Revendications

1. Procédé de transmission de données au travers d'au moins un réseau de communication (NTWK) apte à relier entre eux différents terminaux (T0...Tj...TN), procédé incluant une étape de mémorisation, exécutée sur commande de l'un des terminaux dit instigateur (T0), d'au moins une information (Inf0) dans un premier espace mémoire S(Inf0) auquel seul un accès en lecture est possible pour des terminaux non-instigateurs (T1...Tj...TN), ledit procédé étant **caractérisé en ce qu'**il comporte en outre:
une étape de transmission d'un message de sollicitation Sm(1,P,A0,T1,T2) à destination d'au moins un terminal non-instigateur, lequel message de sollicitation Sm(1,P,A0,T1,T2) incluant une indication de localisation (A0) dudit premier espace mémoire S(Inf0), et lequel message de sollicitation Sm(1,P,A0,T1,T2) étant porteur d'une adresse de réponse à laquelle toute réponse (R4) au message de sollicitation Sm(1,P,A0,T1,T2) doit être envoyée pour être mémorisée dans un deuxième espace mémoire (S(R4)), et
. une étape de modification de droits d'accès destinée à être exécutée sur commande du terminal instigateur (T0), et à l'issue de laquelle un accès en lecture audit deuxième espace mémoire(S(R4)) est autorisé pour au moins un terminal non-instigateur.

2. Procédé selon la revendication 1, **caractérisé en ce que**, l'adresse de réponse étant identique à l'indication de localisation (A0), ledit deuxième espace mémoire (S(R4)) résulte d'une étape de recherche d' un espace libre adjacent au premier espace mémoire S(Inf0).

3. Procédé selon la revendication 1 ou 2, **caractérisé en ce qu'**il inclut en outre au moins une étape de retransmission depuis un terminal non-instigateur donné vers un autre terminal non-instigateur, d'un message de sollicitation Sm(1,P,A0,T1,T2) reçu par ledit terminal non-instigateur donné.

4. Procédé selon la revendication 3, **caractérisé en ce qu'**il inclut en outre au moins une étape de comptage d'un nombre de transmissions auxquelles un même message de sollicitation Sm(1,P,A0,T1,T2) a été soumis, et au moins une étape de comparaison dudit nombre de transmissions avec un nombre prédéterminé (P).

5. Procédé selon l'une des revendications 1 à 4, **caractérisé en ce qu'**il inclut en outre une étape d'attribution d'une date limite de pertinence au message de sollicitation Sm(1,P,A0,T1,T2), et une étape de restriction d'accès à l'information (Inf0) visée par l'indication de localisation (A0) incluse dans ledit message de sollicitation Sm(1,P,A0,T1,T2), laquelle étape de restriction étant destinée à être exécutée sitôt dépassée la date limite de pertinence.

6. Procédé selon l'une des revendications 1 à 5, **caractérisé en ce qu'**il inclut en outre une étape d'attribution d'une date limite de réponse au message de sollicitation Sm(1,P,A0,T1,T2), et une étape d'inhibition d'écriture dans ledit deuxième espace mémoire (S(R4)), laquelle étape d'inhibition d'écriture étant destinée à être exécutée sitôt dépassée ladite date limite de réponse.

7. Signal destiné à être transmis entre deux terminaux appartenant à une pluralité de terminaux (T0...Tj...TN) reliés entre eux par au moins un réseau de communication (NTWK), ledit signal étant **caractérisé en ce qu'**il est porteur d'un message de sollicitation Sm(1,P,A0,T1,T2) incluant:
- une indication de localisation (A0) d'au moins un premier espace mémoire S(Inf0) où a été mémorisée une information (Inf0) sur commande d'un terminal dit instigateur (T0), premier espace mémoire S(Inf0) auquel seul un accès en lecture est possible pour des terminaux non-instigateurs (T1...TJ...TN),
- et une adresse de réponse à laquelle toute réponse (R4) au message de sollicitation Sm(1,P,A0,T1,T2) doit être envoyée pour être mémorisée dans un deuxième espace mémoire (S(R4)), un accès en lecture audit deuxième espace mémoire (S(R4)) étant autorisé pour au moins un terminal non-instigateur après modification de droits d'accès par le terminal instigateur (T0).

8. Programme d'ordinateur destiné à être mis en oeuvre dans un système de transmission de données incluant au moins un réseau de communication (NTWK) apte à relier entre eux différents terminaux (T0...Tj...TN), programme d'ordinateur incluant au moins une série d'instructions aptes à provoquer, sur commande d'un terminal dit instigateur (T0), une exécution d'au moins une étape de mémorisation d'une information (Inf0) dans un premier espace mémoire S(Inf0) auquel seul un accès en lecture est possible pour des terminaux non-instigateurs (T1...Tj...TN), ledit programme d'ordinateur étant **caractérisé en ce qu'**il comporte en outre:
. une série d'instructions aptes à provoquer une exécution d'une étape de transmission d'un message de sollicitation Sm(1,P,A0,T1,T2) à destination d'au moins un terminal non-instigateur, lequel message de sollicitation Sm(1,P,A0,T1,T2) incluant une indication de localisation (A0) dudit premier espace mémoire S(Inf0), et lequel message de sollicitation Sm(1,P,A0,T1,T2) étant porteur d'une adresse de réponse à laquelle toute réponse (R4) au message de sollicitation Sm(1P,A0,T1,T2) doit être envoyée pour être mémorisée dans un deuxième espace mémoire (S(R4)), et
. une série d'instructions aptes à provoquer une exécution d'une étape de modification de droits d'accès, à l'issue de laquelle un accès en lecture audit deuxième espace mémoire (S(R4)) est autorisé pour au moins un terminal non-instigateur.

9. Support mémoire sur lequel est mémorisé un programme d'ordinateur conforme à la revendication 8.

10. Système de transmission de données incluant au moins un réseau de communication (NTWK) apte à relier entre eux différents terminaux (T0...Tj...TN), système incluant en outre des moyens de mémorisation (MEM0), destinés à être activés sur commande de l'un des terminaux dit instigateur (T0), et à mémoriser au moins une information (Inf0) dans un premier espace mémoire S(Inf0) auquel seul un accès en lecture est possible pour des terminaux non-instigateurs (T1...Tj...TN), ledit système étant **caractérisé en ce qu'**il comporte en outre:
. des moyens de transmission (IOT0) d'un message de sollicitation Sm(1,P,A0,T1,T2) à destination d'au moins un terminal non-instigateur, lequel message de sollicitation Sm(1,P,A0,T1,T2) incluant une indication de localisation (A0) dudit premier espace mémoire S(Inf0), et lequel message de sollicitation Sm(1,P,A0,T1,T2) étant porteur d'une adresse de réponse à laquelle toute réponse (R4) au message de sollicitation Sm(1,P,A0,T1,T2) doit être envoyée pour être mémorisée dans un deuxième espace mémoire (S(R4)), et
. des moyens de modification de droits d'accès, aptes à autoriser un accès en lecture audit deuxième espace mémoire (S(R4)) pour au moins un terminal non-instigateur.

11. Dispositif de télécommunication apte à être relié à d'autres dispositifs de télécommunication via au moins un réseau de communication (NTWK), **caractérisé en ce qu'**il inclut en outre:
- des moyens de transmission (IOT0) d'un message de sollicitation Sm(1,P,A0,T1,T2) à destination d'au moins un autre dispositif de télécommunication, lequel message de sollicitation incluant une indication de localisation (A0) d'un premier espace mémoire S(Inf0) dans lequel est mémorisée au moins une information (Inf0), et lequel message de sollicitation Sm(1,P,A0,T1,T2) étant porteur d'une adresse de réponse à laquelle toute réponse (R4) au message de sollicitation doit être envoyée pour être mémorisée dans un deuxième espace mémoire (S(R4)),
- et des moyens de modification de droits d'accès, aptes à autoriser un accès en lecture audit deuxième espace mémoire (S(R4)) pour au moins un terminal non-instigateur.

## Claims

1. Method for transmitting data across at least one communication network (NTWK) capable of connecting various terminals (T0...Tj...TN) together, which method including a step, executed on the command of one of the terminals, called the instigator (T0), of storing at least one item of information (Inf0) in a first memory space S(Inf0) to which only one read access is possible for non-instigator terminals (T1...Tj...TN), said method being **characterized in that** it also comprises:
• a step of transmitting a solicitation message Sm(1,P,A0,T1,T2) to at least one non-instigator terminal, which solicitation message Sm(1,P,A0,T1,T2) including an indication of location (A0) of said first memory space S(Inf0), and which solicitation message Sm(1,P,A0,T1,T2) being a carrier of a response address to which any response (R4) to the solicitation message Sm(1,P,A0,T1,T2) must be sent to be stored in a second memory space (S(R4)), and
• a step of modifying access rights intended to be executed on command of the instigator terminal (T0), and after which a read access to said second memory space (S(R4)) is authorized for at least one non-instigator terminal.

2. Method according to Claim 1, **characterized in that**, the response address being identical to the indication of location (A0), said second memory space (S(R4)) results from a step of searching for a free space adjacent to the first memory space S(Inf0).

3. Method according to Claim 1 or 2, **characterized in that** it also includes at least one step of forwarding from a given non-instigator terminal to another non-instigator terminal a solicitation message Sm(1,P,A0,T1,T2) received by said given non-instigator terminal.

4. Method according to Claim 3, **characterized in that** it also includes at least one step of counting a number of transmissions to which one and the same solicitation message Sm(1,P,A0,T1,T2) has been subjected, and at least one step of comparing said number of transmissions with a predetermined number (P).

5. Method according to one of Claims 1 to 4, **characterized in that** it also includes a step of allocating a pertinence deadline date to the solicitation message Sm(1,P,A0,T1,T2), and a step of restricting access to the information (Inf0) directed at by the indication of location (A0) included in said solicitation message Sm(1,P,A0,T1,T2), which restriction step being intended to be executed as soon as the pertinence deadline date is passed.

6. Method according to one of Claims 1 to 5, **characterized in that** it also includes a step of allocating a deadline date for the response to the solicitation message Sm(1,P,A0,T1,T2), and a step of barring writing in said second memory space (S(R4)), which write-barring step being intended to be executed as soon as said deadline date for the response is passed.

7. Signal intended to be transmitted between two terminals belonging to a plurality of terminals (T0...Tj...TN) connected together by at least one communication network (NTWK), said signal being **characterized in that** it is the carrier of a solicitation message Sm(1,P,A0,T1,T2) including:
- an indication of location (A0) of at least one first memory space S(Inf0) where an item of information (Inf0) has been stored at the command of a terminal called an instigator (T0), a first memory space S(Inf0) to which only one read access is possible for non-instigator terminals (T1...Tj...TN),
- and a response address to which any response (R4) to the solicitation message Sm(1,P,A0,T1,T2) must be sent in order to be stored in a second memory space (S(R4)), a read access to said second memory space (S(R4)) being authorized for at least one non-instigator terminal after modification of access rights by the instigator terminal (T0).

8. Computer program intended to be used in a data transmission system including at least one communication network (NTWK) capable of connecting various terminals (T0...Tj...TN) together, which computer program including at least one series of instructions capable of causing, at the command of a terminal called an instigator (T0), an execution of at least one step of storing an item of information (Inf0) in a first memory space S(Inf0) to which only one read access is possible for non-instigator terminals (T1...Tj...TN), said computer program being **characterized in that** it also comprises:
• a series of instructions capable of causing an execution of a step of transmitting a solicitation message Sm(1,P,A0,T1,T2) to at least one non-instigator terminal, which solicitation message Sm(1,P,A0,T1,T2) including an indication of location (A0) of said first memory space S(Inf0), and which solicitation message Sm(1,P,A0,T1,T2) being the carrier of a response address to which any response (R4) to the solicitation message Sm(1,P,A0,T1,T2) must be sent to be stored in a second memory space (S(R4)), and
• a series of instructions capable of causing an execution of a step of modifying access rights, after which a read access to said second memory space (S(R4)) is authorized for at least one non-instigator terminal.

9. Memory medium on which a computer program according to Claim 8 is stored.

10. Data transmission system including at least one communication network (NTWK) capable of connecting various terminals (T0...Tj...TN) together, which system also including storage means (MEM0), intended to be activated on the command of one of the terminals called instigator (T0), and to store at least one item of information (Inf0) in a first memory space S(Inf0) to which only one read access is possible for non-instigator terminals (T1...Tj...TN), said system being **characterized in that** it also comprises:
• means (IOT0) for transmitting a solicitation message Sm(1,P,A0A,T1,T2) to at least one non-instigator terminal, which solicitation message Sm(1,P,A0,T1,T2) including an indication of location (A0) of said first memory space S(Inf0), and which solicitation message Sm(1,P,A0,T1,T2) being the carrier of a response address to which any response (R4) to the solicitation message Sm(1,P,A0,T1,T2) must be sent in order to be stored in a second memory space (S(R4)), and
• means for modifying access rights, capable of authorizing a read access to said second memory space (S(R4)) for at least one non-instigator terminal.

11. Telecommunication device capable of being connected to other telecommunication devices via at least one communication network (NTWK), **characterized in that** it also includes:
- means (IOT0) for transmitting a solicitation message Sm(1,P,A0,T1,T2) to at least one other telecommunication device, which solicitation message including an indication of location (A0) of a first memory space S(Inf0) in which at least one item of information (Inf0) is stored, and which solicitation message Sm(1,P,A0,T1,T2) being the carrier of a response address to which any response (R4) to the solicitation message must be sent in order to be stored in a second memory space (S(R4)),
- and means for modifying access rights, capable of authorizing a read access to said second memory space (S(R4)) for at least one non-instigator terminal.

## Patentansprüche

1. Verfahren zur Datenübertragung über wenigstens ein Kommunikationsnetz (NTWK), das dazu ausgelegt ist, mehrere Endgeräte (T0 ... Tj ... TN) miteinander zu verbinden, wobei das Verfahren einen Schritt enthält, der auf Befehl von einem der Endgeräte, das Anführer (T0) genannt wird, ausgeführt wird, um wenigstens eine Information (Inf0) in einem ersten Speicherraum S(Inf0) zu speichern, auf den für die vom Anführer verschiedenen Endgeräte (T1... Tj ... TN) nur ein Lesezugriff möglich ist, wobei das Verfahren **dadurch gekennzeichnet ist, dass** es außerdem enthält:
- einen Schritt zum Übertragen einer Anfragenachricht Sm(1, P, A0, T1, T2) zu wenigstens einem vom Anführer verschiedenen Endgerät, wobei die Anfragenachricht Sm(1, P, A0, T1, T2) eine Angabe (A0) der Lokalisierung des ersten Speicherraums S(Inf0) enthält und wobei die Anfragenachricht Sm(1, P, A0, T1, T2) Träger einer Antwort adresse ist, an die jede Antwort (R4) auf die Anfragenachricht Sm(1, P, A0, T1, T2) geschickt werden muss, um in einem zweiten Speicherraum (S(R4)) gespeichert zu werden, und
- einen Schritt zum Modifizieren der Zugriffsrechte, der dazu vorgesehen ist, auf Befehl des Anführerendgeräts (T0) ausgeführt zu werden, wobei an seinem Ende ein Lesezugriff auf den zweiten Speicherraum (S(R4)) für wenigstens ein vom Anführer verschiedenes Endgerät zugelassen wird.

2. Verfahren nach Anspruch 1, **dadurch gekennzeichnet, dass** dann, wenn die Antwort adresse mit der Lokalisierungsangabe (A0) identisch ist, der zweite Speicherraum (S(R4)) aus einem Schritt des Suchens eines freien Raums benachbart zu dem ersten Speicherraum S(Inf0) resultiert.

3. Verfahren nach Anspruch 1 oder 2, **dadurch gekennzeichnet, dass** es außerdem wenigstens einen Schritt der Rückübertragung von einem gegebenen vom Anführer verschiedenen Endgerät zu einem anderen vom Anführer verschiedenen Endgerät einer Anfragenachricht Sm(1, P, A0, T1, T2), die von dem gegebenen vom Anführer verschiedenen Endgerät empfangen wird, enthält.

4. Verfahren nach Anspruch 3, **dadurch gekennzeichnet, dass** es außerdem wenigstens einen Schritt des Zählens einer Anzahl von Übertragungen, denen dieselbe Anfragenachricht Sm(1, P, A0, T1, T2) unterworfen worden ist, und wenigstens einen Schritt des Vergleichens der Anzahl von Übertragungen mit einer vorgegebenen Anzahl (P) enthält.

5. Verfahren nach einem der Ansprüche 1 bis 4, **dadurch gekennzeichnet, dass** es außerdem einen Schritt des Hinzufügens eines Gültigkeitsgrenzdatums zu der Anfragenachricht Sm(1, P, A0, T1, T2) und einen Schritt des Beschränkens des Zugriffs auf Informationen (Inf0), auf die die in der Anfragenachricht Sm(1, P, A0, T1, T2) enthaltene Lokalisierungsangabe (A0) zielt, enthält, wobei der Beschränkungsschritt dazu bestimmt ist, sofort nach dem Verstreichen des Gültigkeitsgrenzdatums ausgeführt zu werden.

6. Verfahren nach einem der Ansprüche 1 bis 5, **dadurch gekennzeichnet, dass** es außerdem einen Schritt des Hinzufügens eines Antwortgrenzdatums zu der Anfragenachricht Sm(1, P, A0, T1, T2) und einen Schritt des Verhinderns eines Schreibens in den zweiten Speicherraum (S(R4)) enthält, wobei der Schreibverhinderungsschritt dazu bestimmt ist, sofort nach dem Verstreichen des Antwortgrenzdatum ausgeführt zu werden.

7. Signal, das dazu bestimmt ist, zwischen zwei Endgeräten übertragen zu werden, die zu mehreren Endgeräten (T0 ... Tj ... TN) gehören, die durch wenigstens ein Kommunikationsnetz (NTWK) miteinander verbunden sind, wobei das Signal **dadurch gekennzeichnet ist, dass** es Träger einer Anfragenachricht Sm(1, P, A0, T1, T2) ist, die enthält:
- eine Angabe (A0) zum Lokalisieren wenigstens eines ersten Speicherraums S(Inf0), in dem auf Befehl eines Endgeräts, das Anführer (T0) genannt wird, eine Information (Inf0) gespeichert worden ist, wobei auf den ersten Speicherraum S(Inf0) für die vom Anführer verschiedenen Endgeräte (T1... Tj ... TN) nur ein Lesezugriff möglich ist,
- und eine Antwort adresse, zu der jede Antwort (R4) auf die Anfragenachricht Sm(1, P, A0, T1, T2) geschickt werden muss, um in einem zweiten Speicherraum (S(R4)) gespeichert zu werden, wobei ein Lesezugriff auf den zweiten Speicherraum (S(R4)) für wenigstens ein vom Anführer verschiedenes Endgerät nach einer Modifikation der Zugriffsrechte durch das Anführerendgerät (T0) zugelassen wird.

8. Computerprogramm, das dazu bestimmt ist, in einem Datenübertragungssystem ausgeführt zu werden, das wenigstens ein Kommunikationsnetz (NTWK) enthält, das verschiedene Endgeräte (T0 ... Tj ... TN) miteinander verbinden kann, wobei das Computerprogramm wenigstens eine Reihe von Befehlen enthält, die auf Befehl eines Endgeräts, das Anführer (T0) genannt wird, eine Ausführung wenigstens eines Schrittes zum Speichern einer Information (Inf0) in einem ersten Speicherraum S(Inf0) hervorrufen können, auf den für die vom Anführer verschiedenen Endgeräte (T1 ... Tj ... TN) nur ein Lesezugriff möglich ist, wobei das Computerprogramm **dadurch gekennzeichnet ist, dass** es außerdem enthält:
- eine Reihe von Befehlen, die eine Ausführung eines Schrittes zum Übertragen einer Anfragenachricht Sm(1, P, A0, T1, T2) zu wenigstens einem vom Anführer verschiedenen Endgerät hervorrufen können, wobei die Anfragenachricht Sm(1, P, A0, T1, T2) eine Angabe (A0) zur Lokalisierung des ersten Speicherraums S(Inf0) enthält und wobei die Anfragenachricht Sm(1, P, A0, T1, T2) Träger einer Antwort adresse ist, zu der jede Antwort (R4) auf die Anfragenachricht Sm(1, P, A0, T1, T2) geschickt werden muss, um in einem zweiten Speicherraum (S(R4)) gespeichert zu werden, und
- eine Reihe von Befehlen, die eine Ausführung eines Schrittes zum Modifizieren von Zugriffsrechten hervorrufen können, an dessen Ende ein Lesezugriff auf den zweiten Speicherraum (S(R4)) für wenigstens ein vom Anführer verschiedenes Endgerät zugelassen wird.

9. Speicherträger, auf dem ein Computerprogramm nach Anspruch 8 gespeichert ist.

10. Datenübertragungssystem, das wenigstens ein Kommunikationsnetz (NTWK) enthält, das verschiedene Endgeräte (T0 ... Tj ... TN) miteinander verbinden kann, wobei das System außerdem Speichermittel (MEM0) enthält, die dazu bestimmt sind, auf Befehl von einem der Endgeräte, das Anführer (T0) genannt wird, aktiviert zu werden, und wenigstens eine Information (Inf0) in einem ersten Speicherraum S(Inf0) zu speichern, auf den für die vom Anführer verschiedenen Endgeräte (T1 ... Tj ... TN) nur ein Lesezugriff möglich ist, wobei das System **dadurch gekennzeichnet ist, dass** es außerdem enthält:
- Mittel (IOT0) zum Übertragen einer Anfragenachricht Sm(1, P, A0, T1, T2) zu wenigstens einem vom Anführer verschiedenen Endgerät, wobei die Anfragenachricht Sm(1, P, A0, T1, T2) eine Angabe (A0) zur Lokalisierung des ersten Speicherraums S(Inf0) enthält und wobei die Arifragenachricht Sm(1, P, A0, T1, T2) Träger einer Antwort adresse ist, zu der jede Antwort (R4) auf die Anfragenachricht Sm(1, P, A0, T1, T2) geschickt werden muss, um in einem zweiten Speicherraum (S(R4)) gespeichert zu werden, und
- Mittel zum Modifizieren von Zugriffsrechten, die einen Lesezugriff auf den zweiten Speicherraum (S(R4)) für wenigstens ein vom Anführer verschiedenes Endgerät zulassen können.

11. Telekommunikationsvorrichtung, die mit anderen Telekommunikationsvorrichtungen über wenigstens ein Kommunikationsnetz (NTWK) verbunden werden kann, **dadurch gekennzeichnet, dass** sie außerdem enthält:
- Mittel (IOT0) zum Übertragen einer Anfragenachricht Sm(1, P, A0, T1, T2) zu wenigstens einer anderen Telekommunikationsvorrichtung, wobei die Anfragenachricht eine Angabe (A0) zur Lokalisierung eines ersten Speicherraums S(Inf0) enthält, in dem wenigstens eine Information (Inf0) gespeichert wird, und wobei die Anfragenachricht Sm(1, P, A0, T1, T2) Träger einer Antwortadresse ist, zu der jede Antwort (R4) auf die Anfragenachricht geschickt werden muss, um in einem zweiten Speicherraum (S(R4)) gespeichert zu werden,
- und Mittel zum Modifizieren von Zugriffsrechten, die einen Lesezugriff auf den zweiten Speicherraum (S(R4)) für wenigstens ein vom Anführer verschiedenes Endgerät zulassen können.
